# EUROPEAN PATENT SPECIFICATION

(11) **EP 3 281 857 B1**
(45) Date of publication and mention of the grant of the patent: **09.01.2019**
(21) Application number: 16196668.4
(22) Date of filing: 31.10.2016
(51) Int. Cl.: B62M 3/08

(54) **QUICK-RELEASE DEVICE FOR A BICYCLE PEDAL**
VORRICHTUNG ZUM SCHNELLEN LÖSEN EINES FAHRRADPEDALS
DISPOSITIF À LIBÉRATION RAPIDE POUR UNE PÉDALE DE BICYCLETTE

(30) Priority: 08.08.2016 TW 105211964 U
(43) Date of publication of application: 14.02.2018
(73) Proprietor: Neco Technology Industry Co., Ltd., Taichung City 41361 (TW)
(72) Inventor: Chen, Ching-Hui, 41361 Taichung City (TW)
(74) Representative: Lang, Christian

(56) References cited:
- WO-A2-2011/136503
- JP-A- H01 197 193
- US-A- 2 536 466
- US-A1- 2003 205 103
- US-A1- 2008 163 721

## Description

### BACKGROUND OF THE INVENTION

### Field of the Invention

The present invention relates to a bicycle pedal, and more particularly to a quick-release device for a bicycle pedal.

### Related Prior Art

The bicycle pedal is the part of a bicycle that the rider pushes with their foot to propel the bicycle. However, after a certain time of use, the bicycle pedal is likely to get loose and need adjustment or replacement.

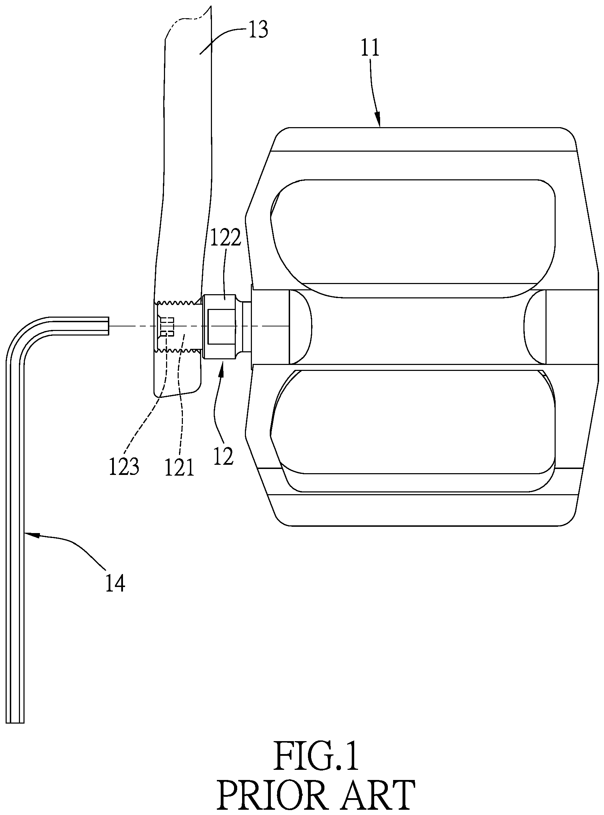

As shown in Fig. 1, a conventional pedal essentially comprises: a pedal body 11, an axial shaft 12 and a bearing (not shown) disposed between the pedal body 11 and the axial shaft 12 to allow for rotation of the pedal body 11 about the axial shaft 12. The axial shaft 12 is provided at one end thereof with a threaded portion 121 and a work portion 122. The threaded portion 121 is screwed to a crank arm 13 of the bicycle, and the bearing is sleeved onto another end of the axial shaft 12 and inserted in the pedal body 11.

To replace the pedal, the user has to use a hand tool to rotate the work portion 122, or can insert a hand tool 14 in a hexagonal socket 123 which is defined in the threaded portion 121 and then rotates to disassemble the pedal. However, no matter rotating the work portion 122 or inserting in the hexagonal socket 123, it requires the use of hand tool.

US-A-2 536 466 discloses a quick-release device for a bicycle pedal having the features of the preamble of claim 1.

The present invention has arisen to mitigate and/or obviate the afore-described disadvantages.

### SUMMARY

The present invention is aimed at providing a quick-release device for a bicycle pedal which allows the bicycle pedal to be assembled or removed easily without the use of a tool.

Therefore, a quick-release device for a bicycle pedal in accordance with the present invention, comprises:
a pedal body including an outer lateral surface, an opposite inner lateral surface, and a plurality of inserting sockets defined in the inner lateral surface;
an axial shaft rotatably disposed in the pedal body and including a work portion which is located outside the inner lateral surface;
a slide bushing sleeved onto the work portion of the axial shaft and movable between a first position and a second position, and including: an inserting hole for insertion of the work portion, and a plurality of inserting protrusions which are to be inserted in the inserting sockets, when the slide bushing is in the first position, the inserting protrusions are disengaged from the inserting sockets of the pedal body, and when the slide bushing is in the second position, the inserting protrusions are inserted in the inserting sockets; and
a spring sleeved on the axial shaft and located between the inner lateral surface of the pedal and the slide bushing to push the slide bushing to the first position.

Preferably, the quantity of the inserting sockets is two, and the quantity of the inserting protrusions is two.

Preferably, the work portion has a non circular cross section, and the inserting hole of the slide bushing is formed in the shape of the work portion.

Preferably, the slide bushing is a hollow ring structure with a front end surface, an opposite rear end surface, and a shoulder portion between the front and rear end surfaces, the inserting protrusions are formed on the front end surface, and the spring has a first end pushing against the inner lateral surface of the pedal body and a second end pushing against the shoulder portion of the slide bushing.

Preferably, the spring is a compression spring.

Preferably, the axial shaft further includes a threaded portion which is located further than the work portion from the inner lateral surface, and the threaded portion is screwed in a threaded hole of a crank arm, when the slide bushing is in the first position, the rear end surface of the slide bushing is abutted against an outer surface of the crank arm.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there are illustrated preferred embodiments of the invention.

### BRIEF DESCRIPTION OF THE DRAWINGS

Fig. 1 is a side view of a conventional bicycle pedal;
Fig. 2 is an exploded view of a quick-release device for a bicycle pedal in accordance with a preferred embodiment of the present invention;
Fig. 3 is an assembly view of the quick-release device for a bicycle pedal in accordance with a preferred embodiment of the present invention;
Fig. 4 is a cross sectional view of the quick-release device for a bicycle pedal in accordance with a preferred embodiment of the present invention;
Fig. 5 is a cross sectional view of the present invention showing that the slide bushing is sleeved onto the axial shaft;
Fig. 6 is a cross sectional view of the present invention showing that the slide bushing moves toward the pedal body; and
Fig. 7 is an exploded view of the present invention showing that the pedal is removed from the crank arm.

### DETAILED DESCRIPTION

The present invention will be clearer from the following description when viewed together with the accompanying drawings, which show, for purpose of illustrations only, the preferred embodiment in accordance with the present invention.

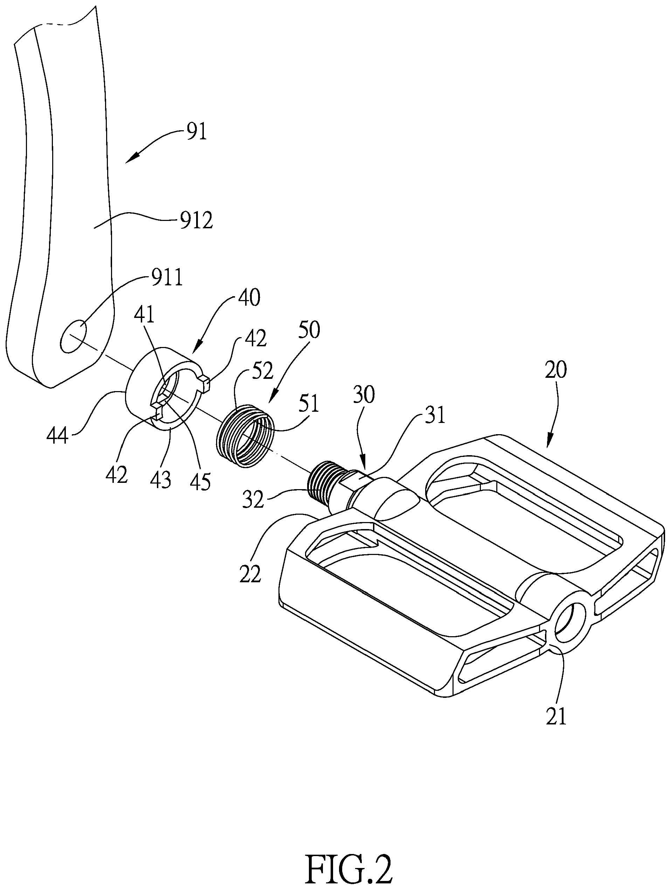

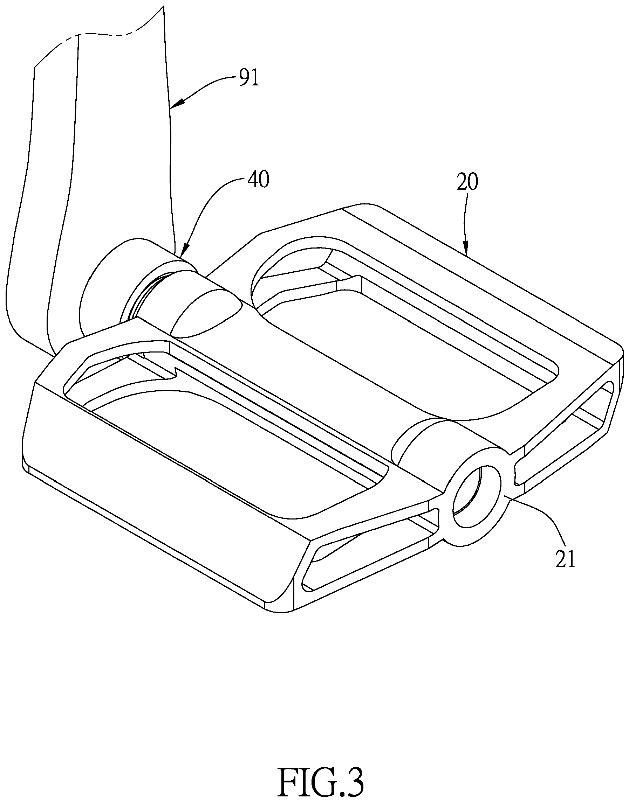

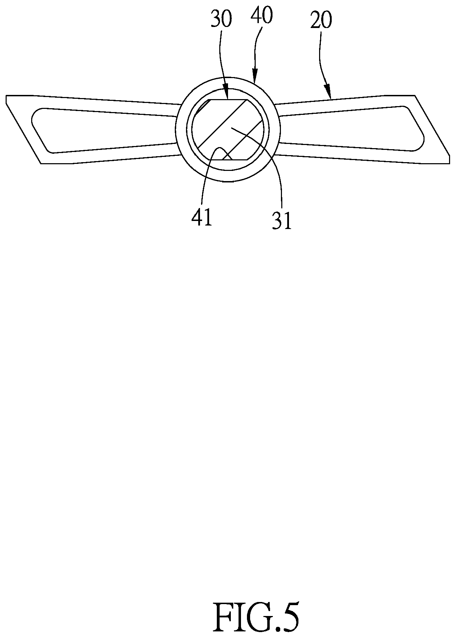

Referring to Figs. 2-6, a quick-release device for a bicycle pedal in accordance with the preferred embodiment of the present invention comprises: a pedal body 20, an axial shaft 30, a slide bushing 40, and a spring 50.

The pedal body 20 includes an outer lateral surface 21, an opposite inner lateral surface 22, and two inserting sockets 23 defined in the inner lateral surface 22.

The axial shaft 30 is rotatably disposed in the pedal body 20 and includes a work portion 31 which is located outside the inner lateral surface 22. In this embodiment, the work portion 31 has a non circular cross section, the axial shaft 30 further includes a threaded portion 32 which is located further than the work portion 31 from the inner lateral surface 22, and the threaded portion 32 is screwed in a threaded hole 911 of a crank arm 91. Two bearing 92, 93 are sleeved on one end of the axial shaft 30 and inserted in the pedal body 20, so that the pedal body 20 is pivoted to the axial shaft 30.

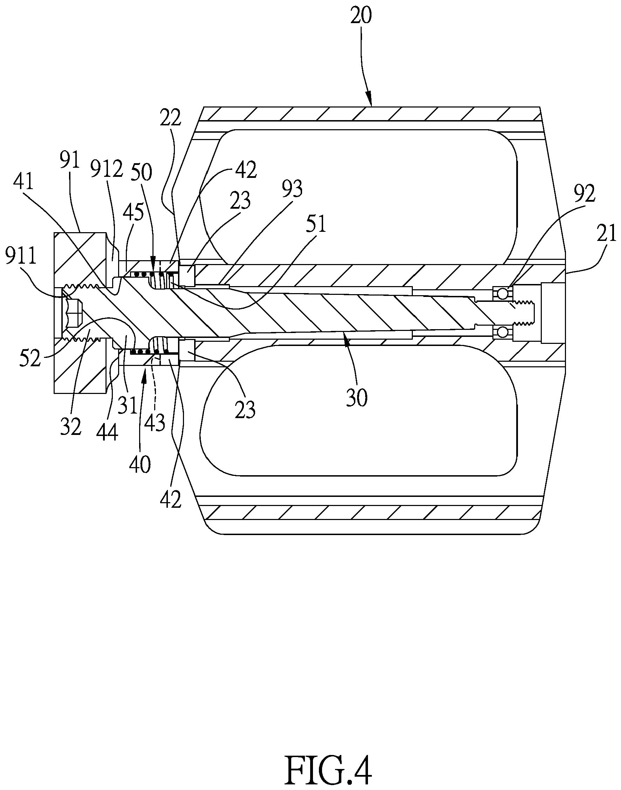

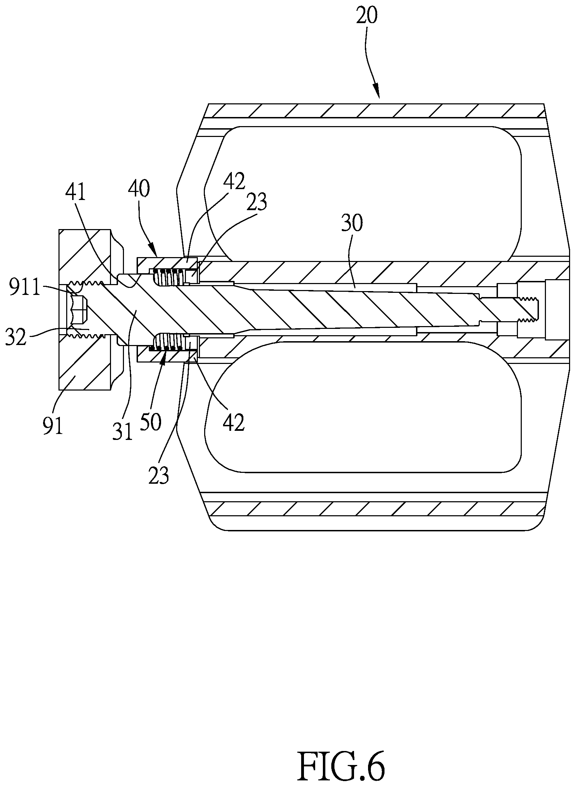

The slide bushing 40 is sleeved onto the work portion 31 of the axial shaft 30 and movable between a first position (as shown in Fig. 4) and a second position (as shown in Fig. 6), and includes: an inserting hole 41 for insertion of the work portion 31, and a plurality of inserting protrusions 42 which are to be inserted in the inserting sockets 23. When the slide bushing 40 is in the first position, the inserting protrusions 42 are disengaged from the inserting sockets 23 of the pedal body 20, and when the slide bushing 40 is in the second position, the inserting protrusions 42 are inserted in the inserting sockets 23. In this embodiment, there are two inserting protrusions 42. The inserting hole 41 of the slide bushing 40 is formed in the shape of the work portion 31, so as to prevent rotation between the slide bushing 40 and the axial shaft 30. The slide bushing 40 is a hollow ring structure with a front end surface 43, an opposite rear end surface 44, and a shoulder portion 45 between the front and rear end surfaces 43, 44. The shoulder portion 45 defines the inserting hole 41, and the inserting protrusions 42 are formed on the front end surface 43. When the slide bushing 40 is in the first position, the rear end surface 44 of the slide bushing 40 is abutted against an outer surface 912 of the crank arm 91.

The spring 50 is sleeved on the axial shaft 30 and located between the inner lateral surface 22 of the pedal and the slide bushing 40 to push the slide bushing 40 to the first position. In this embodiment, the spring 50 is a compression spring which has a first end 51 pushing against the inner lateral surface 22 of the pedal body 20 and a second end 52 pushing against the shoulder portion 45 of the slide bushing 40.

What mentioned above are the structural relations of the components of the embodiment, for a better understanding of the functions and effects of the invention, reference should be made to the following description.

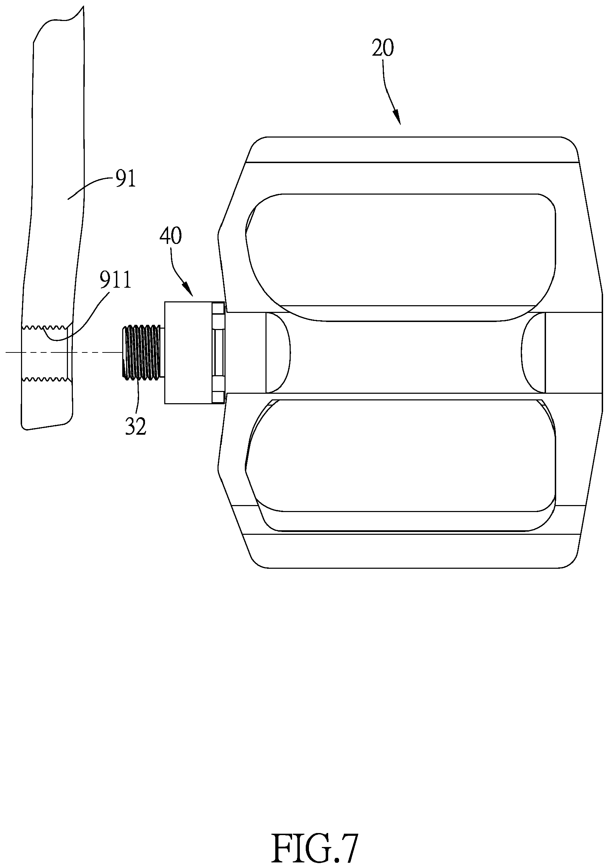

Referring to Figs. 4, 6 and 7, to disassemble the pedal body 20, the slide bushing 40 is in the first position, the user can rotate the pedal body 20 to make the inserting sockets 23 of the pedal body 20 aligned with the inserting protrusions 42 of the slide bushing 40, and at this moment, the slide bushing 40 is still in the first position. Then the slide bushing 40 is pushed toward the pedal body 20 until the inserting protrusions 42 of the slide bushing 40 are inserted in the inserting sockets 23 of the pedal body 20, and the spring 50 is compressed. At this moment, the work portion 31 of the axial shaft 30 is non-rotatably inserted in the inserting hole 41 of the slide bushing 40, and the inserting protrusions 42 of the slide bushing 40 are inserted in the inserting sockets 23 of the pedal body 20. Therefore, when the slide bushing 40 is in the second position, rotating the pedal body 20 can make the axial shaft 30 rotate with respect to the crank arm 91, consequently causing disengagement of the threaded portion 32 of the axial shaft 30 from the threaded hole 911 of the crank arm 91, so that the pedal body 20 is removed from the crank arm 91. The pedal body 20 can be assembled on the crank arm 91 again by repeating the previous steps in a reverse order.

By such arrangements, the quick-release device allows the pedal to be assembled or removed easily without the use of a hand tool.

It is to be noted that, as shown in Fig. 4, when the slide bushing 40 is in the first position, the slide bushing 40 is pushed by the spring 50 to make the inserting protrusions 42 disengage from the inserting sockets 23 of the pedal body 20, meanwhile, the rear end surface 44 of the slide bushing 40 is abutted against the outer surface 912 of the crank arm 91. At this moment, the pedal body 20 is able to rotate with respect to the axial shaft 30 without interfering with the slide bushing 40, and therefore, the pedal body 20 can be pushed.

While we have shown and described various embodiments in accordance with the present invention, it is clear to those skilled in the art that further embodiments may be made without departing from the scope of the present invention.

## Claims

1. A quick-release device for a bicycle pedal, comprising:
a pedal body (20) including an outer lateral surface (21), an opposite inner lateral surface (22),
an axial shaft (30) rotatably disposed in the pedal body (20) and including a work portion (31) which is located outside the inner lateral surface (22);
**characterized by**
a plurality of inserting sockets (23) defined in the inner lateral surface (22);
a slide bushing (40) sleeved onto the work portion (31) of the axial shaft (30) and movable between a first position and a second position, and including: an inserting hole (41) for insertion of the work portion (31), and a plurality of inserting protrusions (42) which are to be inserted in the inserting sockets (23), when the slide bushing (40) is in the first position, the inserting protrusions (42) are disengaged from the inserting sockets (23) of the pedal body (20), and when the slide bushing (40) is in the second position, the inserting protrusions (42) are inserted in the inserting sockets (23); and
a spring (50) sleeved on the axial shaft (30) and located between the inner lateral surface (22) of the pedal and the slide bushing (40) to push the slide bushing (40) to the first position.

2. The quick-release device as claimed in claim 1, wherein the quantity of the inserting sockets is two, and the quantity of the inserting protrusions is two.

3. The quick-release device as claimed in claim 1, wherein the work portion (31) has a non circular cross section, and the inserting hole (41) of the slide bushing (40) is formed in the shape of the work portion (31)

4. The quick-release device as claimed in claim 1, wherein the slide bushing (40) is a hollow ring structure with a front end surface (43), an opposite rear end surface (44), and a shoulder portion (45) between the front and rear end surfaces (43, 44), the inserting protrusions (42) are formed on the front end surface (43), and the spring (50) has a first end (51) pushing against the inner lateral surface (22) of the pedal body (20) and a second end (52) pushing against the shoulder portion (45) of the slide bushing (40).

5. The quick-release device as claimed in claim 1, wherein the spring (50) is a compression spring.

6. The quick-release device as claimed in claim 4, wherein the spring (50) is a compression spring.

7. The quick-release device as claimed in claim 1, wherein the axial shaft (30) further includes a threaded portion (32) which is located further than the work portion (31) from the inner lateral surface (22), and the threaded portion (32) is screwed in a threaded hole (911) of a crank arm (91), when the slide bushing (40) is in the first position, the rear end surface (44) of the slide bushing (40) is abutted against an outer surface (912) of the crank arm (91).

## Patentansprüche

1. Vorrichtung zum schnellen Lösen eines Fahrradpedals, umfassend
einen Pedalkörper (20), der eine äußere laterale Oberfläche (21), eine entgegenliegende innere laterale Oberfläche (22), eine Achswelle (30), die drehbar in dem Pedalkörper (20) angebracht ist und einen Arbeitsabschnitt (31) umfasst, der außerhalb der inneren lateralen Oberfläche (22) angeordnet ist,
**gekennzeichnet durch**
eine Vielzahl an Einstecksockeln (23), die in der inneren lateralen Oberfläche (22) definiert sind;
eine Gleitbuchse (40), die auf den Arbeitsabschnitt (31) der Achswelle (30) gehülst ist und zwischen einer ersten Position und einer zweiten Position beweglich ist und umfasst: ein Einsteckloch (41) zum Einstecken des Arbeitsabschnitts (31) und eine Vielzahl an Einsteckvorsprüngen (42), die in die Einstecksockel (23) zu stecken sind, wobei, wenn die Gleitbuchse (40) in der ersten Position ist, die Einsteckvorsprünge (42) nicht mit den Einstecksockeln (23) des Pedalkörpers (20) in Eingriff sind und wenn die Gleitbuchse (40) in der zweiten Position ist, die Einsteckvorsprünge (42) in die Einstecksockel (23) gesteckt sind, und
eine Feder (50), die auf die Achswelle (30) gehülst ist und zwischen der inneren lateralen Oberfläche (22) des Pedals und der Gleitbuchse (40) angeordnet ist, um die Gleitbuchse (40) in die erste Position zu schieben.

2. Vorrichtung zum schnellen Lösen eines Fahrradpedals gemäß Anspruch 1, bei der die Quantität der Einstecksockel zwei ist und die Quantität der Einsteckvorsprünge zwei ist.

3. Vorrichtung zum schnellen Lösen eines Fahrradpedals gemäß Anspruch 1, bei der der Arbeitsabschnitt (31) einen nicht kreisförmigen Querschnitt aufweist und das Einsteckloch (41) der Gleitbuchse (40) in der Form des Arbeitsabschnitts (31) ausgebildet ist.

4. Vorrichtung zum schnellen Lösen eines Fahrradpedals gemäß Anspruch 1, bei der die Gleitbuchse (40) eine hohle Ringstruktur mit einer vorderen Endfläche (43), einer entgegenliegenden hinteren Endfläche (44) und einem Schulterabschnitt (45) zwischen den vorderen und hinteren Endflächen (43, 44) ist, wobei die Einsteckvorsprünge (42) an der vorderen Endfläche (43) ausgebildet sind, und wobei die Feder (50) ein erstes Ende (51), das gegen die innere laterale Oberfläche (22) des Pedalkörpers (20) drückt, und ein zweites Ende (52) aufweist das gegen den Schulterbereich (45) der Gleitbuchse (40) drückt.

5. Vorrichtung zum schnellen Lösen eines Fahrradpedals gemäß Anspruch 1, bei der die Feder (50) eine Kompressionsfeder ist.

6. Vorrichtung zum schnellen Lösen eines Fahrradpedals gemäß Anspruch 4, bei der die Feder (50) eine Kompressionsfeder ist

7. Vorrichtung zum schnellen Lösen eines Fahrradpedals gemäß Anspruch 1, bei der die Achswelle (30) ferner einen Gewindeabschnitt (32) umfasst, der weiter als der Arbeitsabschnitt (31) von der lateralen inneren Oberfläche (22) angeordnet ist und bei der der Gewindebereich (32) in ein Gewindeloch (911) eines Kurbelarms (91) geschraubt ist, wobei, wenn die Gleitbuchse (40) in der ersten Position ist, die hintere Endfläche (44) der Gleitbuchse (40) gegen eine Außenfläche (912) des Kurbelarms (91) anliegt.

## Revendications

1. Dispositif à déclenchement rapide pour une pédale de bicyclette, comprenant:
un corps de pédale (20) incluant une surface latérale extérieure (21), une surface latérale intérieure opposée (22),
une tige axiale (30) disposée en rotation dans le corps de pédale (20) et incluant une portion de travail (31) qui est située à l'extérieur de la surface latérale intérieure (22);
**caractérisé par**
une pluralité d'emboîtements d'insertion (23) définis dans la surface latérale intérieure (22);
une douille coulissante (40) manchonnée sur la portion de travail (31) de la tige axiale (30) et mobile entre une première position et une seconde position, et incluant: un trou d'insertion (41) pour l'insertion de la portion de travail (31), et une pluralité de protubérances d'insertion (42) qui doivent être insérées dans les emboîtements d'insertion (23), lorsque la douille coulissante (40) est dans la première position, les protubérances d'insertion (42) sont désenclenchées des emboîtements d'insertion (23) du corps de pédale (20), et lorsque la douille coulissante (40) est dans la seconde position, les protubérances d'insertion (42) sont insérées dans les emboîtements d'insertion (23); et un ressort (50) manchonné sur la tige axiale (30) et situé entre la surface latérale intérieure (22) de la pédale et la douille coulissante (40) pour pousser la douille coulissante (40) vers la première position.

2. Dispositif à déclenchement rapide selon la revendication 1, dans lequel la quantité des emboîtements d'insertion s'élève à deux, et la quantité des protubérances d'insertion s'élève à deux.

3. Dispositif à déclenchement rapide selon la revendication 1, dans lequel la portion de travail (31) a une section transversale non circulaire, et le trou d'insertion (41) de la douille coulissante (40) est formé selon la forme de la portion de travail (31).

4. Dispositif à déclenchement rapide selon la revendication 1, dans lequel la douille coulissante (40) est une structure de bague creuse avec une surface d'extrémité avant (43), une surface d'extrémité arrière opposée (44), et une portion d'épaulement (45) entre les surfaces d'extrémité avant et arrière (43, 44), les protubérances d'insertion (42) sont formées sur la surface d'extrémité avant (43), et le ressort (50) a une première extrémité (51) poussant contre la surface latérale intérieure (22) du corps de pédale (20) et une seconde extrémité (52) poussant contre la portion d'épaulement (45) de la douille coulissante (40).

5. Dispositif à déclenchement rapide selon la revendication 1, dans lequel le ressort (50) est un ressort de compression.

6. Dispositif à déclenchement rapide selon la revendication 4, dans lequel le ressort (50) est un ressort de compression.

7. Dispositif à déclenchement rapide selon la revendication 1, dans lequel la tige axiale (30) inclut en outre une portion filetée (32) qui est située plus loin que la portion de travail (31) depuis la surface latérale intérieure (22), et la portion filetée (32) est vissée dans un trou fileté (911) d'une manivelle (91) lorsque la douille coulissante (40) est dans la première position, la surface d'extrémité arrière (44) de la douille coulissante (40) est contiguë contre une surface extérieure (912) de la manivelle (91).
